# EUROPÄISCHE PATENTANMELDUNG

(11) **EP 3 808 787 A1**
(43) Veröffentlichungstag der Anmeldung: **21.04.2021**
(21) Anmeldenummer: 19203550.9
(22) Anmeldetag: 16.10.2019
(51) Int. Cl.: C08F 222/10, C09D 4/00, C09J 4/00

(54) **LICHTHÄRTBARE KLEBSTOFFZUSAMMENSETZUNG FÜR DIE WIMPERNVERLÄNGERUNG**

(71) Anmelder: Zimmer, Margarita, 23552 Lübeck (DE)
(72) Erfinder: Zimmer, Margarita, 23552 Lübeck (DE)
(74) Vertreter: Kudla, Christof

(57) **Zusammenfassung**

Die vorliegende Erfindung betrifft die Verwendung einer lichthärtbaren Klebstoffzusammensetzung zur Verlängerung von Wimpern, wobei die Klebstoffzusammensetzung folgende Bestandteile umfasst oder daraus besteht: a) mindestens ein (Meth)Acrylat mit zwei, drei, vier, fünf, sechs oder mehr als sechs (Meth)Acrylat-Gruppen und b) mindestens einen Photoinitiator, der nach Einstrahlung von Licht eine chemische Reaktion der (Meth)Acrylate injiziert. Die vorliegende Erfindung betriff zudem ein Verfahren zur Verlängerung von Wimpern sowie eine entsprechende Klebstoffzusammensetzung.

## Beschreibung

Die vorliegende Erfindung betrifft die Verwendung einer lichthärtbaren Klebstoffzusammensetzung zur Verlängerung von Wimpern, wobei die Klebstoffzusammensetzung folgende Bestandteile umfasst oder daraus besteht: a) mindestens ein (Meth)Acrylat mit zwei, drei, vier, fünf, sechs oder mehr als sechs (Meth)Acrylat-Gruppen und b) mindestens einen Photoinitiator, der nach Einstrahlung von Licht eine chemische Reaktion der (Meth)Acrylate injiziert. Die vorliegende Erfindung betriff zudem ein Verfahren zur Verlängerung von Wimpern sowie eine entsprechende Klebstoffzusammensetzung.

Für das ästhetische Erscheinungsbild spielen Wimpern eine besondere Rolle. Besonders bei Frauen werden lange, dichte, voluminöse und geschwungene Wimpern als besonders ästhetisch angesehen und sind ein verbreitetes Schönheitsideal für viele Frauen. Um die Wimpern hervorzuheben sind zahlreiche Methoden bekannt. Eine der älteren Methoden, um Wimpern hervorzuheben, ist die Verwendung von Wimperntusche zum Betonen, Färben, Verlängern und Verdichten der Wimpern. Die Wimperntusche wird mit einer Bürste auf die Wimpern aufgetragen und verbleibt dort, bis sie - meist am Abend - wieder entfernt wird. Indem der Wimperntusche Kunstseide- oder Nylon-Fasern hinzugegeben werden, erhält man ebenfalls den optischen Effekt einer tatsächlichen Wimpernverlängerung und ein erhöhtes Wimpernvolumen. Wimperntusche hat allerdings auch den Nachteil, dass sie nicht immer wasserbeständig ist und - beispielsweise während des Sportes oder dem Reiben des Auges - verschmieren kann. Zudem ist es häufig notwendig, den Auftrag der Wimperntusche regelmäßig nachzubessern und ein Entfernen der Wimperntusche vor dem zu Bett gehen ist nötig, was wiederrum dazu führt, dass ein neues Auftragen am nächsten Tag notwendig wird.

Als Alternative zur Wimperntusche wurde die Wimpernverlängerung entwickelt. Bei der Wimpernverlängerung handelt es sich um eine kosmetische Methode, bei der ein oder mehrere Verlängerungswimpern, bei denen es sich um Kunst- oder Naturhaare handelt, mit einem Klebstoff auf jeweils eine natürliche Wimper geklebt werden, um die Länge und Fülle der natürlichen Wimpern zu erhöhen und einen stärkeren Wimpernschwung zu bewirken Die angeklebten Verlängerungswimpern verbleiben permanent auf den natürlichen Wimpern und fallen üblicherweise mit diesen zum Ende der natürlichen Lebenszeit der Wimper aus oder wenn die Klebewirkung des Klebstoffes nachlässt. Im Vergleich mit Wimperntusche entfällt bei einer Wimpernverlängerung ein Abschminken am Abend und Neuschminken am Morgen und ein Verschmieren ist ausgeschlossen.

Als Klebstoffe für die Wimpernverlängerung werden üblicherweise Cyanacrylatklebstoffe verwendet, die auch als Sekundenkleber bekannt sind. Cyanacrylatklebstoffe haben den Vorteil, dass sie innerhalb von wenigen Sekunden aushärten. Beim Anbringen der Wimpernverlängerung wird fast jede der ca. 200 natürlichen Wimpern einzeln mit einer oder mehreren Verlängerungswimpern beklebt. Dass jeweils nur eine natürliche Wimper beklebt wird ist notwendig, da sich die einzelnen Wimpern in unterschiedlichen Haarwachstumsphasen befinden können. Wenn zwei natürliche Wimpern gemeinsam mit den Verlängerungswimpern verklebt werden, kann es dazu kommen, dass eine der zwei natürlichen Wimpern wächst, während die andere sich in einer Ruhephase befindet. Dies würde dazu führen, dass die wachsende Wimper die ruhende Wimper sehr langsam herauszieht, was zu Irritationen, Rötungen, Entzündungen und andauernden starken Schmerzen führen kann. Somit ist es notwendig, dass die circa 150 bis 250 natürlichen Wimpernhaare pro Auge einzeln verklebt werden. Bei einer zu langen Härtezeit des Klebstoffes würde die Behandlung sehr lange dauern.

Nachteilig bei einer sehr schnellen Härtezeit ist es allerdings, dass die Kosmetikerin, oft auch als Lashstylistin bezeichnet, die die Wimpernverlängerung durchführt, sehr präzise arbeiten muss, da eine Korrektur der Wimpern nach dem Aushärten des Klebstoffes nicht mehr möglich ist und der Klebstoff direkt nach dem Auftragen beginnt, auszuhärten. Das Zeitfenster für die korrekte Positionierung der für die Verlängerung verwendeten Verlängerungswimper auf der natürlichen Wimper ist daher auf wenige Sekunden begrenzt. Es wird versucht dieses Problem zu lösen, indem unterschiedliche Cyanacrylatklebstoffe angeboten werden, die unterschiedliche Aushärtezeiten aufweisen. Erfahrene Kosmetikerinnen verwenden dabei einen Cyanacrylatklebstoffe mit kurzer Aushärtezeit während Kosmetikerinnen mit weniger Erfahrung einen Cyanacrylatklebstoff mit längerer Aushärtezeit verwenden und mehr Zeit für die korrekte Positionierung des künstlichen Haares haben.

Da die Aushärtung von Cyanacrylatklebstoffe durch die in Wasser befindlichen Hydroxid-Ionen katalysiert wird, versuchst man zudem, die Aushärtegeschwindigkeit der Cyanacrylatklebstoffe durch die Einstellung der Luftfeuchtigkeit zu steuern. Dabei wird die Luftfeuchtigkeit durch entsprechende Raumbefeuchter oder Raumentfeuchter in einem für die Aushärtung der Cyanacrylatklebstoffe günstigen Bereich gehalten. Je nach verwendetem Cyanoarylatklebstoff sollte die Luftfeuchtigkeit zwischen 30 und 60 % liegen. Die Einstellung der für den Cyanoacrylatklebstoff idealen Luftfeuchtigkeit ist insbesondere während der Heizperiode mit sehr niedriger Luftfeuchtigkeit oder während einer sehr feuchten Wetterlage mit sehr hoher Luftfeuchtigkeit sehr aufwändig und schwierig, da die Be- oder Entfeuchtung von Räumen sehr träge ist und daher ist ein Einstellen der Aushärtegeschwidigkeit der Cyanacrylatklebstoffe über die Luftfeuchtigkeit sehr umständlich.

Zudem hat es sich bei den üblicherweise verwendeten Cyanacrylatklebstoffen gezeigt, dass häufig Reizungen oder allergische Reaktionen auftreten, die zu juckenden, geröteten oder gereizten Augen und Augenbereichen der Person, bei der die Wimpern verlängert werden, führen können. Diese Nebenwirkungen treten bei einem Großteil der Personen auf und man geht davon aus, dass ca. 10 bis 20 % der Personen diese Nebenwirkungen nicht in Kauf nehmen, um eine Wimpernverlängerung durchführen zu lassen.

Bei der Kosmetikerin, die die Wimpernverlängerung mit Cyanacrylatklebstoffen durchführt, können chronische Reizungen der Schleimhäute und der Atemwegsorgane auftreten, da diese häufig täglich und über mehrere Stunden den Emissionen der Cyanacrylatklebstoffe ausgesetzt ist.

Aufgabe der vorliegenden Erfindung war es, einen Klebstoff für die Wimpernverlängerung zur Verfügung zu stellen, bei dem das Auftreten von Reizungen und allergischen Reaktionen vermieden oder zumindest verringert werden kann.

Diese Aufgabe wird erfindungsgemäß gelöst durch die Verwendung einer lichthärtbaren Klebstoffzusammensetzung zur Verlängerung von Wimpern, wobei die Klebstoffzusammensetzung folgende Bestandteile umfasst oder daraus besteht:
a) mindestens ein polyfunktionelles (Meth)Acrylat mit zwei, drei, vier, fünf, sechs oder mehr als sechs (Meth)Acrylat-Gruppen
   und
b) mindestens einen Photoinitiator, der nach Einstrahlung von Licht eine chemische Reaktion der polyfunktionellen (Meth)Acrylate injiziert.

Eigene Untersuchungen haben überraschenderweise gezeigt, dass bei der Verwendung von (Meth)Acrylaten das Auftreten von Reizungen und allergischen Reaktionen vermieden oder zumindest verringert werden kann. Im Unterschied zu Cyanoacrylaten sind (Meth)Acrylate weniger reaktiv und reagieren nicht bereits bei Anwesenheit von Wasser. Durch die Verwendung von Photoinitiatoren lässt sich das Aushärten der Klebstoffzusammensetzung zudem gezielt steuern. Es ist daher erstmalig möglich, die erfindungsgemäße Klebstoffzusammensetzung aufzutragen und das künstliche Haar auf dem zu verlängernden natürlichen Haar ohne Zeitdruck zu platzieren. Nachdem die Kosmetikerin das künstliche Haar korrekt platziert hat, kann Sie die erfindungsgemäße Klebstoffzusammensetzung durch Bestrahlung mit Licht geeigneter Wellenlänge aushärten.

In eigenen Untersuchungen hat sich dabei gezeigt, dass die Anwesenheit eines polyfunktionellen (Meth)Acrylats mit zwei, drei, vier, fünf, sechs oder mehr als sechs (Meth)Acrylat-Gruppen erforderlich ist, um ausgezeichnete Ergebnisse zu erhalten, da hierdurch eine Quervernetzung des resultierenden Poly((meth)acrylates) erfolgt. Hierdurch erhält der resultierende Klebstoff eine hohe Festigkeit und zudem es ist hierdurch möglich, dass der Klebstoff sofort trocken, d.h. mit trockener Oberfläche, aushärtet. In Vergleichsuntersuchungen mit Klebstoffzusammensetzungen, die lediglich (Meth)Acrylat mit einer (Meth)Acrylat-Gruppe enthalten, hat sich gezeigt, dass diese Klebstoffzusammensetzungen feucht aushärten. Dies bedeutet, dass zwar schnell eine gewisse Anfangsfestigkeit eingestellt wird und die Haftwirkung schnell ausreichend hoch ist, sich allerdings an der Oberfläche des Klebstoffes ein feuchter Film mit niedermolekularen oder monomeren (Meth)Acrylaten bildet, der erst nach und nach aushärtet. Dies führt allerdings dazu, dass die Kosmetikerin Sorge tragen muss, dass dieser feuchte Film erst aushärtet, bevor sie mit der nächsten Wimper fortfahren kann. Andernfalls besteht die Gefahr, dass der noch feuchte Klebstoff in Kontakt mit den benachbarten Wimpern gelangt und mit diesen Verklebt. Hierdurch können die oben geschilderten Nebenwirkungen auftreten, die durch unterschiedliches Wachstumsverhalten der zusammen verkleben Wimpern entstehen.

Im Rahmen der vorliegenden Erfindung wird unter einem (Meth)Acrylat ein reaktionsfähiges Molekül verstanden, das sich mit weiteren (Meth)Acrylaten zu unverzweigten oder verzweigten Polymeren zusammenschließen kann. Die hier als (Meth)Acrylate bezeichneten Molekülen werden üblicherweise auch als (Meth)Acrylat-Monomere bezeichnet. Vom Begriff "(Meth)Acrylate" werden im vorliegenden Text Acrylate und Methacrylate umfasst.

Die im Rahmen der vorliegenden Erfindung verwendbaren Photoinitiatoren sind dadurch charakterisiert, dass sie durch Absorption von Licht im Wellenlängenbereich von 300 nm bis 700 nm, bevorzugt von 350 nm bis 600 nm und besonders bevorzugt von 380 nm bis 500 nm, gegebenenfalls in Kombination mit einem oder mehreren Coinitiatoren, die Aushärtung eines erfindungsgemäßen lichthärtbaren Klebstoffzusammensetzung bewirken können.

Erfindungsgemäß bevorzugt ist die Verwendung einer lichthärtbaren Klebstoffzusammensetzung, wobei das polyfunktionelle (Meth)Acrylat ausgewählt ist aus der Gruppe bestehend aus 1,3-Butylenglykoldiacrylat, 1,3-Butylenglykoldimethacrylat, 2,2-Bis-4-(3-methacryloxy-2-hydroxy-propoxy)-phenylpropan (Bis-GMA), Acryl-, Methacryl- oder Ethacrylsäureallylester, Bisphenol-A-diacrylat, Bisphenol-A-diacrylat Derivate, wie ethoxyliertes 2-Bisphenol-A-diacrylat,, Butandioldimethacrylat (BDDMA), Decandioldiacrylat, Decandioldimethacrylat, Di(tetramethylolmethan)-pentamethacrylat, Diethylenglykoldiacrylat, Diethylenglykoldimethacrylat, Dipentaerythrithexa(meth)acrylat, Dipentaerythritol pentaacrylat, Dipropylglykolacrylat, Dipropylglykolmethacrylat, Di-Trimethylolpropan-tetra-acrylat, Di-Trimethylolpropan-tetra-methacrylat, Dodecandioldiacrylat, Dodecandioldimethacrylat (DDDMA), Ethandioldiacrylat, Ethandioldimethacrylat (EDDMA), ethoxyliertes-(15)-Trimethylolpropan-Triacrylat, ethoxyliertes-5-Pentaerythritoltriacrylat, ethoxyliertes-(4)-Pentaerythritol-tetra-acrylat, ethoxyliertes-(4)-Pentaerythritol-tetra-methacrylat, Ethylendimethacrylat, Ethylenglykoldiacrylat, Ethylenglykoldimethacrylat, Glycerindiacrylat, Glycerindimethacrylat, Hexandioldiacrylat, Hexandioldimethacrylat (HDDMA), i-Pentaerythritolpentamethacrylat, Pentaerythritoltetraacrylat, Pentaerythritoltetramethacrylat, Polyethylenglykoldiacrylat (vorzugsweise 400 oder 600 oder mit 4 bis 10 Ethylenoxideinheiten), Polyethylenglykoldimethacrylat (vorzugsweise 400 oder 600 oder mit 4 bis 10 Ethylenoxideinheiten), propoxyliertes-(5.5)-Glyceryltriacrylat, Tetraethylenglykoldiacrylat, Tetraethylenglykoldimethacrylat, Tricyclodecandimethanoldiacrylat, Tricyclodecandimethanoldimethacrylat, Triethylenglykoldiacrylat, Triethylenglykoldimethacrylat, Trimethylolpropantriacrylat (TMPTA), Trimethylolpropantrimethacrylat (TMPTMA), Tris(2-hydroxyethyl)-isocyanurat-triacrylat, Urethanacrylat mit mindestens zwei Acrylat-Gruppen, Urethanmethacrylat mit mindestens zwei Methacrylat-Gruppen und Mischungen hieraus.

Erfindungsgemäß bevorzugt ist die Verwendung einer lichthärtbaren Klebstoffzusammensetzung, wobei das polyfunktionelle (Meth)Acrylat drei oder vier (Meth)Acrylat-Gruppen aufweist. Hierbei hat sich insbesondere das 1,1,1-Trihydroxymethylpropyltriacrylat bewährt und ist erfindungsgemäß besonders bevorzugt.

Eigene Untersuchungen haben gezeigt, dass insbesondere (Meth)Acrylat mit drei oder vier (Meth)Acrylat-Gruppen besonders vorteilhafte Klebstoffe ausbilden und für die Wimpernverlängerung besonders geeignet sind. Insbesondere lassen sich hierdurch schnell aushärtbare Klebstoffe erhalten, die nach dem Aushärten nicht zu spröde sind.

Erfindungsgemäß bevorzugt ist die Verwendung einer lichthärtbaren Klebstoffzusammensetzung, wobei der Massenanteil an sämtlichen polyfunktionellen (Meth)Acrylaten im Bereich von 3 bis 85 % liegt, vorzugsweise im Bereich von 5 bis 80 % liegt, weiter bevorzugt im Bereich von 10 bis 60 % liegt, weiter bevorzugt im Bereich von 27 bis 37 % liegt, bezogen auf das Gesamtgewicht der lichthärtbaren Klebstoffzusammensetzung.

Erfindungsgemäß können der lichthärtbaren Klebstoffzusammensetzung auch (Meth)Acrylate zugesetzt werden, die lediglich eine (Meth)Acrylat-Gruppe umfassen. Hierbei hat es sich als vorteilhaft erwiesen, wenn Mischungen mit zwei, drei oder mehr als drei (Meth)Acrylaten eingesetzt werden, die lediglich eine (Meth)Acrylat-Gruppe. Beispiele geeigneter (Meth)Acrylat mit einer (Meth)Acrylat-Gruppe sind: Methylacrylat (MA), Methylmethacrylat (MMA), Ethylacrylat, Ethylmethacrylat, Propylacrylat, Propylmethacrylat, n-Propylmethacrylat, n-Propylacrylat, i-Propylmethacrylat, i-Propylacrylat, n-Butylacrylat, n-Butylmethacrylat, sek.-Butylacrylat, sek.-Butylmethacrylat, tert.-Butylacrylat, tert.-Butylmethacrylat, Isobutylacrylat, Isobutylmethacrylat, Pentylacrylat, Pentylmethacrylat, n-Pentylacrylat, n-Pentylmethacrylat, Hexylacrylat, n-Hexylacrylat, Hexylmethacrylat, n-Hexylmethacrylat, Heptylacrylat, Heptylmethacrylat, n-Heptylacrylat, n-Heptylmethacrylat, Octylacrylat, Octylmethylacrylat, n-Octylacrylat, n-Octylmethylacrylat, 2-Ethylhexylacrylat, 2-Ethylhexylmethacrylat, Isobornylacrylat, Isobornylmethacrylat, Tetrahydrofurfurylmethacrylat, Tetrahydrofurfuryl-acrylat, Ethylenmethacrylat, 2-Phenoxyethylacrylat, 2-Phenoxyethylmethacrylat, Isodecylmethacrylat, Polypropylen-glykol-mono-methacrylat, Tetrahydrofuryl-methacrylat, Polypropylen-glykol-mono-methacrylat, Hydroxyethylmethacrylat, Hydroxypropylmethacrylat, Ethylenacrylat, 2-Phenoxyethylacrylat, Isodecylacrylat, Polypropylen-glykol-mono-acrylat, Tetrahydrofurylacrylat, Polypropylen-glykol-mono-acrylat, Hydroxyethylacrylat, Hydroxypropylacrylat, Hydroxyethylmethacrylat, Hydroxypropylmethacrylat, Urethan- (Meth)Acrylat und Mischungen aus zwei, drei, vier, fünf, sechs, sieben, acht, neun oder mehr als neun der vorherigen Verbindungen. (Meth)Acrylat mit einer (Meth)Acrylat-Gruppe können beispielsweise als Rektivverdünner eingesetzt werden. Rektivverdünner sind Stoffe, die die Viskosität des Klebstoffes für die Verarbeitung herabsetzen und bei der anschließenden Härtung des Klebstoffes durch Copolymerisation Teil des gehärteten Klebstoffs werden. Allerdings hat es sich als vorteilhaft erwiesen, wenn der Massenanteil an dem (bzw. an sämtlichen) (Meth)Acrylat mit einer (Meth)Acrylat-Gruppe kleiner gleich 45 % beträgt, vorzugsweise kleiner gleich 30 % beträgt, weiter bevorzugt kleiner gleich 14 % beträgt, weiter bevorzugt kleiner gleich 10 % beträgt, ganz besonders bevorzugt kleiner gleich 5 % beträgt, bezogen auf das Gesamtgeweicht der lichthärtbaren Klebstoffzusammensetzung. Erfindungsgemäß besonders bevorzugt ist es, wenn keine (Meth)Acrylat mit einer (Meth)Acrylat-Gruppe in der lichthärtbaren Klebstoffzusammensetzung enthalten sind.

In einer Ausgestaltung der vorliegenden Erfindung ist es vorteilhaft, wenn der Massenanteil an dem (Meth)Acrylat mit einer (Meth)Acrylat-Gruppe kleiner gleich 14 % beträgt und der Massenanteil an sämtlichen polyfunktionellen (Meth)Acrylaten im Bereich von 1 bis 80 % liegt, jeweils bezogen auf das Gesamtgeweicht der lichthärtbaren Klebstoffzusammensetzung

Es hat sich in eigenen Untersuchungen gezeigt, dass monofunktionelle (Meth)Acrylat feucht aushärten und daher sollte der Anteil an (Meth)Acrylat mit einer (Meth)Acrylat-Gruppe möglichst geringgehalten werden oder auf die Verwendung von monofunktionellen (Meth)Acrylaten sollte vollständig verzichtet werden.

Erfindungsgemäß bevorzugt ist die Verwendung einer lichthärtbaren Klebstoffzusammensetzung, wobei die lichthärtbare Klebstoffzusammensetzung zusätzlich mindestens eine Polythiolverbindung umfasst. Vorzugsweise ist die Polythiolverbindung eine Dithiol-, Trithiol- oder Tetrathiolverbindung, insbesondere ein Polythiol mit einer hohen Abbeschen Zahl.

Es hat sich in eigenen Untersuchungen gezeigt, dass Polythiolverbindungen einen positiven Einfluss auf die Aushärtung von erfindungsgemäßen lichthärtbaren Klebstoffzusammensetzungen haben. Ohne sich auf eine bestimmte Theorie festlegen zu wollen, wird davon ausgegangen, dass Polythiolverbindungen der Vernetzungsgrad des ausgehärteten Klebstoffes erhöhen. Ein durch die Zugabe von Polythiolverbindungen zu polyfunktionelles (Meth)Acrylat resultierende positiver Effekt ist in der Hinsicht überraschen, da polyfunktionelles (Meth)Acrylat allein bereits zu einer starken Vernetzung führt. Der Fachmann würde daher davon absehen, dem bereits zu Vernetzung neigenden polyfunktionellen (Meth)Acrylaten einen zusätzlichen Vernetzer hinzuzufügen. Eigene Untersuchungen haben allerdings gezeigt, dass Polythiolverbindung eine sehr hohe Reaktionsgeschwindigkeit mit polyfunktionellen (Meth)Acrylaten aufweisen und hierdurch die Aushärtegeschwindigkeit noch weiter gesteigert werden kann, als es alleine mit polyfunktionellen (Meth)Acrylaten möglich ist. Es hat sich somit gezeigt, dass die Verwendung von Polythiolverbindungen mit polyfunktionellen (Meth)Acrylaten zu einer höheren Vernetzung und einer gesteigerten Reaktionsgeschwindigkeit führt. Wie sich in eigenen Untersuchungen gezeigt hat, sind diese durch die Polythiolverbindungen positiven Eigenschaften insbesondere bei Klebstoffzusammensetzungen für die Wimperverlängerung besonders vorteilhaft und führen zu besonders geeigneten Klebstoffzusammensetzungen.

Erfindungsgemäß bevorzugt ist die Verwendung einer lichthärtbarenKlebstoffzusammensetzung, wobei die Polythiolverbindung ausgewählt ist aus der Gruppe bestehend aus Pentaerythritoltetra-(3-mercaptopropionat) (PETMP), Pentaerythritoltetramercaptoacetat (PETMA), Di-Pentaerythritoltetra-(3-mercapto- propionat), Di-Pentaerythritoltetramercaptoacetat, Di-Pentaerythritolpenta-(3-mercaptopro- pionat), Di-Pentaerythritolpentamercaptoacetat, Di-Pentaerythritolhexa-(3-mercaptopropionat), Di-Pentaerythritolhexamercaptoacetat, Di-Trimethylolpropantetra-(3-mercaptopropionat), Di-Tri-methylolpropantetramercaptoacetat, besonders bevorzugt sind Pentaerythritoltetra-(3-mer-captopropionat) (PETMP), Pentaerythritoltetramercaptoacetat (PETMA), Di-Pentaerythritolhexa-(3-mercaptopropionat), Di-Pentaerythritolhexamercaptoacetat, Di-Trimethylolpropantetra-(3-mercaptopropionat), Di-Trimethylolpropantetramercaptoacetat und ganz besonders bevorzugt sind Pentaerythritoltetra-(3-mercaptopropionat) (PETMP), Pentaerythritoltetramercap- toacetat (PETMA), 1,2,5-Trimercapto-4-thiapentan, 3,3-Dimercaptomethyl-1,5-dimer-capto-2,4-dithiapentan, 3-Mercaptomethyl-1,5-dimercapto-2,4-dithiapentan, 3-Mercaptomethyl-thio-1,7-dimercapto-2,6-dithiaheptan, 1,2,7-Trimercapto-4,6-dithiaheptan, 3,6-Dimercaptomethyl-1,9-dimercapto-2,5,8-trithianonan, 1,2,9-Trimercapto,4,6,8-trithianonan, 3,7-Dimercaptomethyl-1,9-dimercapto-2,5,8-trithianonan, 4,6-Dimercaptomethyl-1,9-dimercapto-2,5,8-trithianonan, 3-Mercaptomethyl-1,6-dimercapto-2,5-dithiahexan, 3-Mercaptomethylthio-1,5-dimercapto-2-thiapentan, 1,1,2,2-Tetrakis(mercaptomethylthio)ethan, 1,1,3,3-Tetrakis(mercaptomethylthio)propan, 1,4,8,11-Tetramercapto-2,6,10-trithiaundecan, 1,4,9,12-Tetramercapto-2,6,7,11-tetrathiadodecan, 2,3-Dithia-1,4-butandithiol, 2,3,5,6-Tetrathia-1,7-heptandithiol und 2,3,5,6,8,9-Hexathia-1,10-decandithiol.

Im Rahmen der vorliegenden Erfindung wird unter einer Polythiolverbindung eine Verbindung verstanden, die zwei, drei, vier, fünf, sechs oder mehr als sechs Thiol-Gruppen (-SH) aufweist. Die Verwendung des Präfixes poly- soll in diesem Zusammenhang nicht indizieren, dass es sich bei der Polythiolverbindung um ein Polymer handeln muss, sondern lediglich um die Anzahl an im Molekül vorhandenen Thiol-Gruppen.

Erfindungsgemäß bevorzugt ist die Verwendung einer lichthärtbaren Klebstoffzusammensetzung, wobei der Massenanteil an sämtlichen Polythiolverbindung im Bereich von 3 bis 85 % liegt, vorzugsweise im Bereich von 5 bis 80 % liegt, weiter bevorzugt im Bereich von 10 bis 60 % liegt, weiter bevorzugt im Bereich von 22 bis 32 % liegt, bezogen auf das Gesamtgewicht der lichthärtbaren Klebstoffzusammensetzung.

Erfindungsgemäß bevorzugt ist die Verwendung einer lichthärtbaren Klebstoffzusammensetzung, wobei Polythiolverbindung eine Trithiol- oder Tetrathiolverbindung ist. Hierbei hat sich insbesondere das Pentaerythritoltetra-(3-mercaptopropionat) (PETMP) bewährt und ist erfindungsgemäß besonders bevorzugt. Ebenfalls erfindungsgemäß besonders bevorzugt ist eine Mischung aus 1,1,1-Trihydroxymethylpropyltriacrylat und Pentaerythritoltetra-(3-mercaptopropionat) (PETMP).

Erfindungsgemäß bevorzugt ist die Verwendung einer lichthärtbaren Klebstoffzusammensetzung, wobei die Klebstoffzusammensetzung zusätzliche eine Verbindung als Beschleuniger enthält.

Im Rahmen des vorliegenden Textes wird unter einem Beschleuniger eine Verbindung verstanden, die die Reaktionsgeschwindigkeit der Polymerisationsreaktion während des Aushärtens der lichthärtbaren Klebstoffzusammensetzung erhöht und somit zu einer Beschleunigung des Aushärtens der Klebstoffzusammensetzung beiträgt. Ob es sich bei einer Verbindung um einen Beschleuniger handelt, kann bestimmt werden, indem zwei Polymeisationsreaktionen durchgeführt werden, wobei bei einer Probe der Beschleuniger beigefügt ist und bei der Vergleichsprobe die Menge Beschleuniger durch einen entsprechendes (Meth)acrylat-Monmer ersetzt wird. Nach entsprechendem Einstrahlen von Licht wird geprüft, ob die den Beschleuniger enthaltene Probe schneller aushärtet als die Vergleichsprobe. Beschleuniger werden häufig auch als Polymerisationsbeschleuniger bezeichnet und sind von den Photoinitiator (Katalysatoren) zu unterscheiden.

Erfindungsgemäß bevorzugt ist der Beschleuniger ausgewählt aus der Gruppe bestehend aus
a) tertiären Aminen, insbesondere
a1) tertiäre aromatische Amine, insbesondere N,N-Dialkyl-aniline, N,N-Dialkyl-p-toluidine oder N,N-Dialkyl-3,5-xylidine, p-(N,N-dialkylamino)-phenylethanol, p-(N,N-dialkylamino)-benzoesäurederivate, p-(N,N-dialkylamino)-benzaldehyd, p-(N,N-dialkylamino)-phenylessigsäureester, p-(N,N-dialkylamino)-phenylpropionsäureester, N,N-Dimethylanilin, N,N-Dimethyl-p-toluidin, Benzyldimethylamin, Dimethylaminomethylphenol, 2,4,6-Tris-(N,N-dimethylaminomethyl)- phenol, N,N'-Bis(3-(dimethylamino)propyl)harnstoff, N,N-3,5-Tetramethylanilin, N,N-Dimethylamino-p-benzaldehyd, p-(Dimethylamino)benzoesäureethylester und p- (Dimethylamino)benzonitril,
a2) tertiäre aliphatische Amine, insbesondere Tri-n-butylamin, Dimethylaminoethan-2-ol, Triethylamin, Triethylendiamin, Dimethylaminoethylmethacrylat, N,N-Dimethylbenzylamin,
a3) heterocyclische Amine, insbesondere 1,2,2,6,6-Pentamethylpiperidin oder AminosäureDerivate, wie z.B. N-Phenylglycin,
b) Aminoalkohole, insbesondere sekundäre und/oder tertiäre Aminoalkohole, besonders bevorzugt Triethanolamin, N,N-Bis(2-hydroxypropyl)ethanolamin, N-Methyldiethanolamin, N-Ethyldiethanolamin, 2- Aminocyclohexanol, Bis(2-hydroxycyclohexyl)methylamin, 2-(Diisopropylamino)ethanol, 2-(Dibutylamino)ethanol, N-Butyldiethanolamin, N-Butylethanolamin, 2-[Bis(2-hydroxyethyl)amino]-2-(hydroxymethyl)-1,3-propandiol, 1-[Bis(2-hydroxyethyl)amino]-2-propanol, Triisopropanolamin, 2-(Dimethylamino)ethanol, 2-(Diethylamino)ethanol, 2-(2-Dimethylaminoethoxy)ethanol, N,N,N'-Trimethyl-N'-hydroxyethylbisaminoethylether, N,N,N'-Trimethylaminoethylethanolamin und N,N,N'-Trimethylaminopropylethanolamin,
c) Pyridin, Imidazole, insbesondere 2-Methylimidazol und 1,8-Diazabicyclo[5.4.0]undec-7-en, Triazine, insbesondere Triallylisocyanurat und Triallylcyanurat, N,N'-(1,3-Phenylene)dimaleimide
   und
d) Phenole oder Phenolderivate, insbesondere 1,2-Dihydroxybenzol (Brenzcatechin), 1,3-Dihydroxybenzol (Resorcin), 1 ,4-Dihydroxybenzol (Hydrochinon), 1,2,3-Trihydroxybenzol (Pyrrogallol), 1,2,4-Trihydroxybenzol (Hydroxyhydrochinon), 1,3,5- Trihydroxybenzol (Phloroglucin), Methylhydrochinon und dergleichen wobei diese phenolischen Grundkörper beliebig substituiert und/oder kondensiert sein können.

Erfindungsgemäß bevorzugt ist die Verwendung einer lichthärtbaren Klebstoffzusammensetzung, wobei der Massenanteil an Beschleuniger im Bereich von 0,1 bis 70 % liegt, vorzugsweise im Bereich von 2 bis 60 % liegt, weiter bevorzugt im Bereich von 20 bis 50 % liegt, bezogen auf das Gesamtgeweicht der lichthärtbaren Klebstoffzusammensetzung.

Besonders bevorzugt ist die Verwendung von Triazinen, insbesondere Triallylisocyanurat und Triallylcyanurat, als Beschleuniger.

Erfindungsgemäß bevorzugt ist die Verwendung einer lichthärtbaren Klebstoffzusammensetzung, wobei die Klebstoffzusammensetzung 1,3,5-Tri-2-propenyl-1,3,5-triazine-2,4,6(1H,3H,5H)-trione enthält, vorzugsweise in Kombination mit 1,1,1-Trihydroxymethylpropyltriacrylat und/oder Pentaerythritoltetra-(3-mercaptopropionat) (PETMP).

Der Zusatz der oben spezifizierten Beschleuniger führt zu einer weiteren Steigerung der Reaktionsgeschwindigkeit und zu einer besseren, trockenen Aushärtung des Klebstoffes.

Erfindungsgemäß bevorzugt ist die Verwendung einer lichthärtbaren Klebstoffzusammensetzung, wobei der Massenanteil an dem Photoinitiator im Bereich von 0,1 bis 7,0 % liegt, vorzugsweise im Bereich von 0,5 bis 6,0 % liegt, weiter bevorzugt im Bereich von 1,0 bis 5,0 % liegt, bezogen auf das Gesamtgeweicht der lichthärtbaren Klebstoffzusammensetzung.

Erfindungsgemäß bevorzugt ist die Verwendung einer lichthärtbaren Klebstoffzusammensetzung, wobei der Photoinitiator ausgewählt ist aus der Gruppe bestehend aus α-substituierte Acetophenon-Derivate, α,α-Dialkoxyacetophenone, α-Hydroxyketone, α-Aminoketone, α-Acyloximester, Phenylglyoxylate, Benzildimethylketale, Monoacylphosphinoxide (MAPO), Bisacylphosphinoxide (BAPO), Phospinoxide, Acylphosphinoxide, metallorganische Verbindungen, Metallocene, Jodoniumsalze, Benzophenone, Benzoin, Benzoinmethylether, Xanthone, Thioxanthon-Derivate, Chinone und Mischungen daraus.

Erfindungsgemäß bevorzugt ist die Verwendung einer lichthärtbaren Klebstoffzusammensetzung, wobei der Photoinitiator ausgewählt ist aus der Gruppe bestehend aus 2-Hydroxy-2-methylpropiophenon, Phenyl-bis-(2,4,6-Trimethylbenzoyl)-phosphinoxid, Ethylphenyl(2,4,6-trimethylbenzoyl)phosphinat [CAS Nr.: 84434-11-7], Campherchinon [CAS Nr.: 10373-78-1 (Racemat), 10334-26-6 [(R)-(-)-Form], 2767-84-2 [(S)-(+)-Form]], 9,10-Phenanthrenchinon, Bis-4-(methoxybenzoyl)diethylgermanium 2,2-Diethoxy-1-phenylethanon [α,α-Diethoxyacetophenon (DEAP)] [CAS Nr.: 6175-45-7], 2,2-Dimethoxy-1,2-diphenylethanon [Benzilmono(dimethylketal),Benzildimethylketal] [CAS Nr. 24650-42-8], 2-Hydroxy-2-methyl-1-phenylpropan-1-on [CAS Nr.: 7473-98-5], (1-Hydroxycyclohexyl)phenylmethanon [CAS Nr.: 947-19-3], 2-Hydroxy-1-[4-(hydroxyethoxy)phenyl]-2-methylpropan-1-on [CAS Nr.: 106797-53-9], 1,1'-(Methylendi-4,1-phenylen)bis[2-hydroxy-2-methylpropan-1-on] [CAS Nr.: 474510-57-1], Oxo-phenylessigsäure-2-[2-(2-oxo-2-phenylacetoxy)ethoxy]ethylester [CAS Nr.: 211510-16-6], 2-Methyl-1-(4-methylsulfanylphenyl)-2-(morpholin-4-yl)propan-1-on [2-Methyl-1-(4-methylthiophenyl)-2-morpholinopropan-1-on] [CAS Nr.: 71868-10-5], 2-Benzyl-2-dimethylamino-1-(morpholin-4-ylphenyl) butan-1-on [2-Benzyl-2-dimethylamino-4-morpholinobutyrophenon][119313-12-1], 2-Dimethylamino-2-[(4-methylphenyl)methyl]-1-[(morpholin-4-yl)phenyl]butan-1-on [CAS Nr.: 119344-86-4], 2,4,6-Trimethylbenzoyldiphenylphosphinoxid [CAS Nr.: 75980-60-8], Bis(2,4,6-trimethylbenzoyl)phenylphosphinoxid [CAS Nr.: 162881-26-7], 1-[4-(Phenylthio)phenyl]-2-(Obenzoyloxim)octan-1,2-dion [CAS Nr.: 253585-83-0], 2-Isopropylthioxanthon [CAS Nr.: 5495-84-1], Bis(η⁵-cyclopentadienyl)bis[2,6-difluor-3-(1Hpyrrol-1-yl)phenyl]titan[125051-32-3], Bis(η⁵-methylcyclopentadienyl)bis(2,6-difluorphenyl)titan [CAS Nr.: 93709-39-8], Methyl benzoylformate [CAS Nr.: 15206-55-0], Oxy-phenylacetic acid 2-[2-hydroxy-ethoxy]-ethyl ester [CAS Nr.: 442536-99-4], Oxy-phenylacetic acid 2-[2-oxo-2-phenyl-acetoxy-ethoxy]-ethyl [CAS Nr.: 211510-16-6] und (4-Methylphenyl)[4-(2-methylpropyl)phenyl]iodonium hexafluorophosphat [CAS Nr.: 344562-80-7].

Erfindungsgemäß bevorzugt ist die Verwendung einer lichthärtbaren Klebstoffzusammensetzung, wobei der oder mindestens einer der Photoinitiator(en) überwiegend für Licht mit einer Wellenlänge unterhalb von 400 nm empfindlich ist.

Erfindungsgemäß bevorzugt ist die Verwendung einer lichthärtbare Klebstoffzusammensetzung, wobei der oder mindestens einer der Photoinitiator(en) überwiegend für Licht mit einer Wellenlänge im Bereich von 400 bis 600 nm empfindlich ist, vorzugsweise in einem Bereich von 440 bis 480 nm empfindlich ist.

Erfindungsgemäß bevorzugt ist die Verwendung einer lichthärtbaren Klebstoffzusammensetzung, wobei die Klebstoffzusammensetzung keine Lösungsmittel enthält. Lösungsmittel sind zwar geeignet, um die Viskosität der Klebstoffzusammensetzung zu erniedrigen, haben allerdings den Nachteil, dass sie nach oder während des Aushärtens des Klebstoffes verdunsten müssen. Dies führt zu einer unerwünschten hohen Konzentration an Lösungsmitteln in der Luft und kann zudem Reizungen und allergische Reaktionen verursachen. Zudem haben eigene kinetische Berechnungen gezeigt, dass die Verwendung eines Lösungsmittels die Reaktionsgeschwindigkeit der Klebstoffzusammensetzung herabsetzt. Wenn überhaupt sollten Lösungsmittel nur in geringen Mengen eingesetzt werden, beispielsweise weniger als 10 Gew.-%, vorzugsweise weniger als 5 Gew.-%, weiter bevorzugt weniger als 1 Gew.-%, jeweils bezogen auf das Gesamtgewicht der Klebstoffzusammensetzung. Zudem sind niedermolekulare Alkohole, wie Ethanol, Methanol oder Propanol, als Lösungsmittel bevorzugt.

Unter Lösungsmitteln werden im Rahmen der vorliegenden Erfindung flüssige Verbindungen verstanden, die die verwendeten (Meth)Acrylate lösen können oder mit diesen Mischbar sind, allerdings an der Härtereaktion des Klebstoffes nicht teilnehmen.

Erfindungsgemäß bevorzugt ist die Verwendung einer lichthärtbaren Klebstoffzusammensetzung, wobei die Klebstoffzusammensetzung eine nach DIN EN 12092:2002-02 bestimmte Viskosität (Rotationsviskosimeter-Verfahren bei 25°C) von weniger als 400 mPa s aufweist, vorzugsweise weniger als 350 mPa s aufweist, weiter bevorzugt von weniger als 200 mPa s aufweist.

Eigene Untersuchungen haben gezeigt, dass die Klebstoffzusammensetzungen besonders gut verarbeitet werden können, wenn sie eine geringe Viskosität aufweisen. Dabei ist es umso vorteilhafter umso geringer die Viskosität der Klebstoffzusammensetzung ist.

Erfindungsgemäß bevorzugt ist die Verwendung einer lichthärtbaren Klebstoffzusammensetzung, wobei die Klebstoffzusammensetzung zusätzlich einen oder mehrere Farbstoffe enthält, vorzugsweise einen schwarzen Farbstoff enthält.

Die Klebstoffzusammensetzung wird dabei vorzugsweise an die Farbe der Wimpernverlängerungen bzw. der natürlichen Wimpern angepasst.

Erfindungsgemäß bevorzugt ist die Verwendung einer lichthärtbaren Klebstoffzusammensetzung, wobei die Klebstoffzusammensetzung in einer Komponente vorliegt und nicht auf mehrere Komponenten/Gebinden aufgeteilt ist.

Erfindungsgemäß bevorzugt ist die Verwendung einer lichthärtbaren Klebstoffzusammensetzung, wobei die Klebstoffzusammensetzung zusätzliche mindestens einen Bestandteil enthält, ausgewählt aus der Gruppe bestehend aus Füllstoffen, Pigmenten, Farbstoffen, Fungiziden, Dispergierhilfsmitteln, Gleitmitteln, Adhäsionspromotoren, UV-Absorber, Extender, Lichtstabilisatoren, Molekulargewichtsregler, Netzmitteln, Verlaufsmitteln und Verdickern. Die Auswahl geeigneter Verbindungen ist dem Fachmann bekannt.

Erfindungsgemäß bevorzugt ist die Verwendung einer lichthärtbaren Klebstoffzusammensetzung, wobei die Klebstoffzusammensetzung zusätzliche eine Verbindung als Stabilisatoren enthält, ausgewählt aus der Gruppe bestehend aus Hydrochinonmonomethylether (HQME), Phenolen, dabei vorzugsweise 2,6-Di-tert.butyl-4-methylphenol (BHT) und tert.-Butylhydroxyanisol (BHA), 2,2-Diphenyl-1-picrylhydrazyl-Radikalen, Galvinoxyl-Radikalen, Triphenylmethyl-Radikalen, 2,3,6,6,-Tetramethylpiperidinyl-1-oxylradikal (TEMPO) sowie dessen Derivaten und Phenothiazin sowie dessen Derivaten.

Erfindungsgemäß bevorzugt ist die Verwendung einer lichthärtbaren Klebstoffzusammensetzung, der Stabilisator in einer Menge von insgesamt mindestens 0,10 Gew.-% und insbesondere von mindestens 0,50 Gew.-% bezogen auf die Gesamtmasse der Klebstoffzusammensetzung vorliegt
und/oder
in einer Menge von insgesamt maximal 5,0 Gew.-% und insbesondere von maximal 2,5 Gew.-% bezogen auf die Gesamtmasse der Klebstoffzusammensetzung vorliegt.

Erfindungsgemäß bevorzugt ist die Verwendung einer lichthärtbaren Klebstoffzusammensetzung, wobei die Klebstoffzusammensetzung keine Cyanacrylate enthält.

In einer weiteren bevorzugten Variante der erfinderischen Verwendung werden zur Radikalstabilisierung Nitroxide eingesetzt, vorzugsweise mit den nachfolgend abgebildeten allgemeinen Formeln (I) und (II): 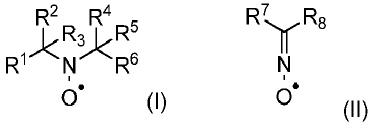 wobei R¹, R², R³, R⁴, R⁵, R⁶, R⁷ und R⁸ unabhängig voneinander gewählt werden und folgende Verbindungen oder Atome bedeuten:
i) Halogenide, wie z.B. Chlor, Brom oder Iod
ii) lineare, verzweigte, cyclische und heterocyclische Kohlenwasserstoffe mit 1 bis 20 Kohlenstoffatomen, die gesättigt, ungesättigt oder aromatisch sein können,
iii) Ester -COOR⁹, Alkoxide -OR¹⁰ und/oder Phosphonate -PO(OR¹¹)₂, wobei R⁹, R¹⁰ und R¹¹ für Reste aus der Gruppe ii) stehen.

Verbindungen der Formel (I) oder (II) können auch an Polymerketten jeglicher Art gebunden sein (vorrangig in dem Sinne, dass zumindest einer der oben genannten Reste eine derartige Polymerkette darstellt) und somit zum Aufbau der Blockcopolymere als Makroradikale oder Makroregler genutzt werden.

Mehr bevorzugt werden als kontrollierte Regler für die Polymerisation (Radikalstabilisierer) Verbindungen verwendet wie z. B. 2,2,5,5-Tetramethyl-1-pyrrolidinyloxyl (PROXYL), 3-Carbamoyl-PROXYL, 2,2-Dimethyl-4,5-cyclohexyl-PROXYL, 3-Oxo-PROXYL, 3-Hydroxylimin-PROXYL, 3-Aminomethyl-PROXYL, 3-Methoxy-PROXYL, 3-tert-Butyl-PROXYL, 3,4-Di-tert-butyl-PROXYL, 2,2,6,6-Tetramethyl-1-piperidinyloxyl pyrrolidinyloxyl (TEMPO), 4-Benzoyloxy-TEMPO, 4-Methoxy-TEMPO, 4-Chloro-TEMPO, 4-Hydroxy-TEMPO, 4-Oxo-TEMPO, 4-Amino-TEMPO, 2,2,6,6,-Tetraethyl-1-piperidinyloxyl, 2,2,6-Thmethyl-6-ethyl-1-piperidinyloxyl, N-tert-Butyl-1-phenyl-2-methylpropylnitroxid, N-tert-Butyl-1-(2-naphtyl)-2-methylpropylnitroxid, N-tert-Butyl-1-diethylphosphono-2,2-dimethylpropylnitroxid, N-tert-Butyl-1-dibenzylphosphono-2,2-dimethylpropylnitroxid, N-(1-Phenyl-2-methyl propyl)-1-diethylphosphono-1-methylethylnitroxid, Di-tert-Butylnitroxid, Diphenylnitroxid, tert-Butyl-tert-amylnitroxid.

Erfindungsgemäß bevorzugt ist die Verwendung einer lichthärtbaren Klebstoffzusammensetzung, wobei die Klebstoffzusammensetzung
1,1,1-Trihydroxymethylpropyltriacrylat, vorzugsweise mit einem Massenanteil im Bereich von 25 bis 40 %,
Ethylphenyl(2,4,6-trimethylbenzoyl)phosphinat, vorzugsweise mit einem Massenanteil im Bereich von 0,5 bis 6 %,
Pentaerythritol tetrakis(3-mercaptopropionat), vorzugsweise mit einem Massenanteil im Bereich von 20 bis 35 %,
und
1,3,5-triallyl-1,3,5-triazin-2,4,6(1H,3H,5H)-trion, vorzugsweise mit einem Massenanteil im Bereich von 35 bis 50 %,
umfasst oder daraus besteht, wobei die Massenanteile jeweils auf die Gesamtmasse der Klebstoffzusammensetzung bezogen sind.

Im nicht ausgehärteten Zustand zeichnet sich die verwendet Klebstoffzusammensetzung vorzugsweise durch einen geringen Kontaktwinkel auf einer Wimper aus (vorzugsweise von weniger als 60°, bevorzugt weniger als 50°, besonders bevorzugt weniger als 40°, insbesondere bevorzugt weniger als 35°, gemessen mit einem Kontaktwinkelmessgerät der Firma Krüss (Drop Shape Analyzer- DSA100M)). Durch einen geringen Kontaktwinkel wird die Anhaftung des Klebstoffes auf den Haaren verbessert. Bei einer Grenzfläche zwischen einer Flüssigkeit (hier die Klebstoffzusammensetzung) und einem Feststoff (hier eine Wimper) wird der Winkel zwischen der Flüssigkeitsoberfläche und dem Umriss der Kontaktfläche als Kontaktwinkel 0 (kleines Theta) bezeichnet. Der Kontaktwinkel ist ein Maß für die Benetzbarkeit eines Festkörpers durch eine Flüssigkeit. Die Benetzbarkeit beschreibt hierbei das Bestreben eines Festkörpers, mit einer in Kontakt tretenden Flüssigkeit eine gemeinsame Grenzfläche zu bilden. Je besser die die Benetzbarkeit der Wimpern mit der erfindungsgemäß verwendeten Klebstoffzusammensetzung ist, desto leichter lässt sich die künstliche Wimper applizieren und desto besser ist die spätere Haftung, da eine größere Klebefläche zwischen der natürlichen und künstlichen Wimper ausgebildet wird. Eigene Untersuchungen habe zudem überraschenderweise gezeigt, dass der Kontaktwinkel vorzugsweise größer 5°, vorzugsweise größer 10°, weiter bevorzugt größer 15° sein sollte.

Erfindungsgemäß bevorzugt ist die Verwendung einer lichthärtbaren Klebstoffzusammensetzung, wobei der Kontaktwinkel der Klebstoffzusammensetzung auf einer Wimper einen Wert im Bereich von 5 bis 90° aufweist, vorzugsweise einen Wert im Bereich von 10 bis 60° aufweist, besonders bevorzugt einen Wert im Bereich von 15 bis 40° aufweist, gemessen mit einem Kontaktwinkelmessgerät der Firma Krüss (Drop Shape Analyzer - DSA100M)).

Erfindungsgemäß können der lichthärtbaren Klebstoffzusammensetzung auch Haftvermittler zugesetzt werden, bei denen es sich um organische Verbindungen handelt, die mindestens zwei unterschiedliche funktionelle Gruppen aufweisen. Die erste funktionelle Gruppe, vorzugsweise eine (Meth)Acrylat-Gruppe reagiert während des Aushärtens des Klebstoffes mit den (Meth)Acrylat-Gruppen der eingesetzten Monomere und hierdurch werden die Haftvermittle in den ausgehärteten Klebstoff chemisch eingebunden. Die zweite funktionelle Gruppe bildet Bindungen (ionische Bindungen, Wasserstoffbrückenbindungen oder kovalente Bindungen) mit der Oberfläche der Haare aus. Bei dieser zweiten funktionellen Gruppe kann es sich beispielsweise und Thiol-Gruppen, Amin-Gruppen, Carbonsäure-Gruppen oder Alkohol-Gruppen handeln.

Ein weiterer Aspekt der vorliegenden Erfindung betrifft ein Verfahren zur Verlängerung von Wimpern, umfassend die folgenden Schritte:
i) Herstellen oder Bereitstellen einer erfindungsgemäßen Klebstoffzusammensetzung,
ii) Herstellen oder Bereitstellen einer künstlichen Wimper,
iii) in Kontaktbringen der in Schritt ii) hergestellten oder bereitgestellten künstlichen Wimper mit der in Schritt i) hergestellten oder bereitgestellten Klebstoffzusammensetzung, sodass ein Teil der Klebstoffzusammensetzung an der künstlichen Wimper haftet und diese benetzt, vorzugswiese an einem Teil der künstlichen Wimper,
iv) in Kontaktbringen einer zu verlängernden Wimper mit der in Schritt iii) mit der Klebstoffzusammensetzung benetzten künstlichen Wimper mit einer zu verlängernden (natürlichen) Wimper, sodass die Klebstoffzusammensetzung zwischen der zu verlängernden Wimper und der künstlichen Wimper angeordnet ist,
v) Bestrahlen der in Klebstoffzusammensetzung mit Licht, sodass die zwischen der zu verlängernden Wimper und der künstlichen Wimper angeordnet Klebstoffzusammensetzung aushärtet und die zu verlängernden Wimper mit der künstlichen Wimper verklebt werden.

Ein weiterer Aspekt der vorliegenden Erfindung betrifft Klebstoffzusammensetzung wie weiter oben im Zusammenhang mit einer erfindungsgemäßen Verwendung definiert.

Ein weiterer Aspekt der vorliegenden Erfindung betrifft ein Kit umfassend
- eine erfindungsgemäße Klebstoffzusammensetzung,
- eine Lampe, deren emittierendes Licht so gewählt ist, dass die erfindungsgemäße Klebstoffzusammensetzung mit diesem Licht gehärtet werden kann, und
- künstliche Wimpern.

Optional kann das erfindungsgemäße Kit gemeinsam mit einer Schulung bzw. Einweisung vertreiben werden.

Ein weiterer Aspekt der vorliegenden Erfindung betrifft eine alternative Verwendung einer lichthärtbaren Klebstoffzusammensetzung zur Verlängerung von Wimpern, wobei die Klebstoffzusammensetzung folgende Bestandteile umfasst oder daraus besteht:
A)
   A1) mindestens ein polyfunktionelles (Meth)Acrylat mit zwei, drei, vier, fünf, sechs oder mehr als sechs (Meth)Acrylat-Gruppen
      und/oder
   A2) mindestens ein monofunktionelles (Meth)Acrylat mit einer (Meth)Acrylat-Gruppen
   und
B) mindestens einen Photoinitiator, der nach Einstrahlung von Licht eine chemische Reaktion der polyfunktionellen und/oder monofunktionellen (Meth)Acrylate injiziert,
C)
   C1) mindestens eine Polythiolverbindung
      und/oder
   C2) mindestens einen Beschleuniger.

Bezüglich der genauen Ausgestaltung der lichthärtbaren Klebstoffzusammensetzung, die in dieser alternativen Verwendung eingesetzt wird, wird auf die Ausführungen weiter oben verwiesen, die hier entsprechend gelten. Dies gilt insbesondere für die weiter oben als bevorzugt gekennzeichneten Ausgestaltungen der jeweiligen Ausführungsformen der lichthärtbaren Klebstoffzusammensetzung.

Ein weiterer Aspekt der vorliegenden Erfindung betrifft eine zweite alternative Verwendung einer lichthärtbaren Klebstoffzusammensetzung zur Verlängerung von Wimpern, wobei die Klebstoffzusammensetzung folgende Bestandteile umfasst oder daraus besteht:
A)
   A1) mindestens eine
      und/oder
   A2) mindestens einen Beschleuniger
   und
B) mindestens einen Photoinitiator, der nach Einstrahlung von Licht eine chemische Reaktion der Polythiolverbindung und/oder des Beschleunigers injiziert.

Bezüglich der genauen Ausgestaltung der lichthärtbaren Klebstoffzusammensetzung, die in dieser zweiten alternativen Verwendung eingesetzt wird, wird auf die Ausführungen weiter oben verwiesen, die hier entsprechend gelten. Dies gilt insbesondere für die weiter oben als bevorzugt gekennzeichneten Ausgestaltungen der jeweiligen Ausführungsformen der lichthärtbaren Klebstoffzusammensetzung.

Die vorliegende Erfindung wird nunmehr durch die folgenden Beispiele näher erläutert werden, auf die sie jedoch keineswegs beschränkt wird.

### Beispiel 1: Herstellung einer erfindungsgemäßen Klebstoffzusammensetzung:

40 Gewichtsteile 1,1,1-Trihydroxymethylpropyltriacrylat und 5,0 Gewichtsteile Ethylphenyl(2,4,6-trimethylbenzoyl)phosphinat, wurden miteinander vermischt. Man erhält eine erfindungsgemäße Klebstoffzusammensetzung, die mit UVA-Licht im Wellenlängenbereich von 320-400 nm ausgehärtet werden kann.

### Beispiel 2: Herstellung einer erfindungsgemäßen Klebstoffzusammensetzung:

40 Gewichtsteile 1,3,5-triallyl-1,3,5-triazin-2,4,6(1H,3H,5H)-trion, 2,5 Gewichtsteile Ethylphenyl(2,4,6-trimethylbenzoyl)phosphinat und 25 Gewichtsteile 1,1,1-Trihydroxymethylpropyltriacrylat wurden miteinander vermischt. Man erhält eine erfindungsgemäße Klebstoffzusammensetzung, die mit UVA-Licht im Wellenlängenbereich von 320-400 nm ausgehärtet werden kann.

### Beispiel 3: Herstellung einer erfindungsgemäßen Klebstoffzusammensetzung:

40 Gewichtsteile 1,3,5-triallyl-1,3,5-triazin-2,4,6(1H,3H,5H)-trion, 2,5 Gewichtsteile Ethylphenyl(2,4,6-trimethylbenzoyl)phosphinat und 32,5 Gewichtsteile Pentaerythritol tetrakis(3-mercaptopropionat) wurden miteinander vermischt. Man erhält eine erfindungsgemäße Klebstoffzusammensetzung, die mit UVA-Licht im Wellenlängenbereich von 320-400 nm ausgehärtet werden kann.

### Beispiel 4: Herstellung einer erfindungsgemäßen Klebstoffzusammensetzung:

40 Gewichtsteile 1,3,5-triallyl-1,3,5-triazin-2,4,6(1H,3H,5H)-trion, 2,5 Gewichtsteile Ethylphenyl(2,4,6-trimethylbenzoyl)phosphinat, 32,5 Gewichtsteile Pentaerythritol tetrakis(3-mercaptopropionat), und 25 Gewichtsteile 1,1,1-Trihydroxymethylpropyltriacrylat wurden miteinander vermischt. Man erhält eine erfindungsgemäße Klebstoffzusammensetzung, die mit UVA-Licht im Wellenlängenbereich von 320-400 nm ausgehärtet werden kann.

### Beispiel 5: Anwendung der in den Beispielen 1 bis 4 hergestellten Klebstoffzusammensetzungen zur Verlängerung von Wimpern:

Die in den Beispielen 1 bis 4 hergestellten Klebstoffzusammensetzungen wurden verwendet, um die Wimpern zu verlängern. Nach dem Auftrag der jeweiligen Klebstoffzusammensetzung auf eine künstliche Wimper wird diese auf eine natürliche Wimper aufgelegt und die Klebstoffzusammensetzung wird mit Licht einer Wellenlänge von 365 nm bestrahlt. Die Klebstoffe härten nach der Bestrahlung sofort aus, wobei der Klebstoff aus Beispiel 4 die besten Aushärteeigenschaften aufweist.

Während der Verwendung der erfindungsgemäßen Klebstoffzusammensetzungen kam es zu keinen Reizungen oder allergischen Reaktionen.

## Patentansprüche

1. Verwendung einer lichthärtbaren Klebstoffzusammensetzung zur Verlängerung von Wimpern, wobei die Klebstoffzusammensetzung folgende Bestandteile umfasst oder daraus besteht:
a) mindestens ein polyfunktionelles (Meth)Acrylat mit zwei, drei, vier, fünf, sechs oder mehr als sechs (Meth)Acrylat-Gruppen
und
b) mindestens einen Photoinitiator, der nach Einstrahlung von Licht eine chemische Reaktion der polyfunktionellen (Meth)Acrylate injiziert.

2. Verwendung nach Anspruch 1, wobei der Massenanteil an dem mindestens einen niedermolekularen (Meth)Acrylat im Bereich von 3 bis 85 % liegt, vorzugsweise im Bereich von 5 bis 80 % liegt, weiter bevorzugt im Bereich von 10 bis 60 % liegt, weiter bevorzugt im Bereich von 27 bis 37 % liegt, bezogen auf das Gesamtgeweicht der lichthärtbaren Klebstoffzusammensetzung.

3. Verwendung nach einem der vorherigen Ansprüche, wobei die lichthärtbare Klebstoffzusammensetzung zusätzlich mindestens eine Polythiolverbindung umfasst.

4. Verwendung nach Anspruch 3, wobei die Polythiolverbindung ausgewählt ist aus der Gruppe bestehend aus Pentaerythritoltetra-(3-mercaptopropionat) (PETMP), Pentaerythritoltetramercaptoacetat (PETMA), Di-Pentaerythritoltetra-(3-mercapto- propionat), Di-Pentaerythritoltetramercaptoacetat, Di-Pentaerythritolpenta-(3-mercaptopro- pionat), Di-Pentaerythritolpentamercaptoacetat, Di-Pentaerythritolhexa-(3-mercaptopropionat), Di-Pentaerythritolhexamercaptoacetat, Di-Trimethylolpropantetra-(3-mercaptopropionat), Di-Trimethylolpropantetramercaptoacetat, besonders bevorzugt sind Pentaerythritoltetra-(3-mer- captopropionat) (PETMP), Pentaerythritoltetramercaptoacetat (PETMA), Di-Pentaerythritolhexa- (3-mercaptopropionat), Di-Pentaerythritolhexamercaptoacetat, Di-Trimethylolpropantetra-(3- mercaptopropionat), Di-Trimethylolpropantetramercaptoacetat und ganz besonders bevorzugt sind Pentaerythritoltetra-(3-mercaptopropionat) (PETMP) und Pentaerythritoltetramercap- toacetat (PETMA).

5. Verwendung nach Anspruch 3 oder 4, wobei der Massenanteil an sämtlichen Polythiolverbindung im Bereich von 3 bis 85 % liegt, vorzugsweise im Bereich von 5 bis 80 % liegt, weiter bevorzugt im Bereich von 10 bis 60 % liegt, weiter bevorzugt im Bereich von 22 bis 32 % liegt, bezogen auf das Gesamtgeweicht der lichthärtbaren Klebstoffzusammensetzung.

6. Verwendung nach einem der vorherigen Ansprüche, wobei die lichthärtbare Klebstoffzusammensetzung keine (Meth)Acrylat mit einer (Meth)Acrylat-Gruppe enthält.

7. Verwendung nach einem der vorherigen Ansprüche, wobei die lichthärtbare Klebstoffzusammensetzung zusätzlich Triallylisocyanurat und/oder Triallylcyanurat enthält.

8. Verwendung nach Anspruch 7, wobei der Massenanteil an Triallylisocyanurat und Triallylcyanurat im Bereich von 0,1 bis 70 % liegt, vorzugsweise im Bereich von 2 bis 60 % liegt, weiter bevorzugt im Bereich von 20 bis 50 % liegt, bezogen auf das Gesamtgeweicht der lichthärtbaren Klebstoffzusammensetzung.

9. Verwendung nach einem der vorherigen Ansprüche, wobei der Massenanteil an dem Photoinitiator im Bereich von 0,1 bis 7,0 % liegt, vorzugsweise im Bereich von 0,5 bis 6,0 % liegt, weiter bevorzugt im Bereich von 1,0 bis 5,0 % liegt, bezogen auf das Gesamtgeweicht der lichthärtbaren Klebstoffzusammensetzung.

10. Verwendung nach einem der vorherigen Ansprüche, wobei der Photoinitiator ausgewählt ist aus der Gruppe bestehend aus α-substituierte Acetophenon-Derivate, α,α-Dialkoxyacetophenone, α-Hydroxyketone, α-Aminoketone, α-Acyloximester, Phenylglyoxylate, Benzildimethylketale, Monoacylphosphinoxide (MAPO), Bisacylphosphinoxide (BAPO), Phospinoxide, Acylphosphinoxide, metallorganische Verbindungen, Metallocene, Jodoniumsalze, Benzophenone, Benzoin, Benzoinmethylether, Xanthone, Thioxanthon-Derivate, Chinone und Mischungen daraus.

11. Verwendung nach einem der vorherigen Ansprüche, wobei die Klebstoffzusammensetzung eine nach DIN EN 12092:2002-02 bestimmte Viskosität (Rotationsviskosimeter-Verfahren bei 25°C) von weniger als 400 mPa s aufweist, vorzugsweise weniger als 350 mPa s aufweist, weiter bevorzugt von weniger als 200 mPa s aufweist.

12. Verwendung nach einem der vorherigen Ansprüche, wobei der Kontaktwinkel der Klebstoffzusammensetzung auf einer Wimper einen Wert im Bereich von 5 bis 90° aufweist, vorzugsweise einen Wert im Bereich von 10 bis 60° aufweist, besonders bevorzugt einen Wert im Bereich von 15 bis 40° aufweist, gemessen mit einem Kontaktwinkelmessgerät der Firma Krüss (Drop Shape Analyzer - DSA100M)).

13. Verwendung nach einem der vorherigen Ansprüche, wobei die Klebstoffzusammensetzung zusätzliche eine Verbindung als Beschleuniger enthält, ausgewählt aus der Gruppe bestehend aus
a) tertiären Aminen, insbesondere
a1) tertiäre aromatische Amine, insbesondere *N,N*-Dialkyl-aniline, *N,N-*Dialkyl-p-toluidine oder *N,N-*Dialkyl-3,5-xylidine, p-(N,N-dialkylamino)-phenylethanol, p-(N,N-dialkylamino)-benzoesäurederivate, p-(N,N-dialkylamino)-benzaldehyd, p-(N,N-dialkylamino)-phenylessigsäureester, p-(N,N-dialkylamino)-phenylpropionsäureester, N,N-Dimethylanilin, N,N-Dimethyl-p-toluidin, Benzyldimethylamin, Dimethylaminomethylphenol, 2,4,6-Tris-(N,N-dimethylaminomethyl)- phenol, N,N'-Bis(3-(dimethylamino)propyl)harnstoff, N,N-3,5-Tetramethylanilin, N,N-Dimethylamino-p-benzaldehyd, p-(Dimethylamino)benzoesäureethylester und p- (Dimethylamino)benzonitril,
a2) tertiäre aliphatische Amine, insbesondere Tri-n-butylamin, Dimethylaminoethan-2-ol, Triethylamin, Triethylendiamin, Dimethylaminoethylmethacrylat, N,N-Dimethylbenzylamin,
a3) heterocyclische Amine, insbesondere 1,2,2,6,6-Pentamethylpiperidin oder Aminosäure-Derivate, wie z.B. N-Phenylglycin,
b) Aminoalkohole, insbesondere sekundäre und/oder tertiäre Aminoalkohole, besonders bevorzugt Triethanolamin, N,N-Bis(2-hydroxypropyl)ethanolamin, N-Methyldiethanolamin, N-Ethyldiethanolamin, 2- Aminocyclohexanol, Bis(2-hydroxycyclohexyl)methylamin, 2-(Diisopropylamino)ethanol, 2-(Dibutylamino)ethanol, N-Butyldiethanolamin, N-Butylethanolamin, 2-[Bis(2-hydroxyethyl)amino]-2-(hydroxymethyl)-1,3-propandiol, 1-[Bis(2-hydroxyethyl)amino]-2-propanol, Triisopropanolamin, 2-(Dimethylamino)ethanol, 2-(Diethylamino)ethanol, 2-(2-Dimethylaminoethoxy)ethanol, N,N,N'-Trimethyl-N'-hydroxyethylbisaminoethylether, N,N,N'-Trimethylaminoethylethanolamin und N,N,N'-Trimethylaminopropylethanolamin,
c) Pyridin, Imidazole, insbesondere 2-Methylimidazol und 1,8-Diazabicyclo[5.4.0]undec-7-en, Triazine, insbesondere Triallylisocyanurat und Triallylcyanurat, N,N'-(1,3-Phenylene)dimaleimide
und
d) Phenole oder Phenolderivate, insbesondere 1,2-Dihydroxybenzol (Brenzcatechin), 1,3-Dihydroxybenzol (Resorcin), 1 ,4-Dihydroxybenzol (Hydrochinon), 1,2,3-Trihydroxybenzol (Pyrrogallol), 1,2,4-Trihydroxybenzol (Hydroxyhydrochinon), 1,3,5- Trihydroxybenzol (Phloroglucin), Methylhydrochinon und dergleichen wobei diese phenolischen Grundkörper beliebig substituiert und/oder kondensiert sein können.

14. Verfahren zur Verlängerung von Wimpern, umfassend die folgenden Schritte:
i) Herstellen oder Bereitstellen einer Klebstoffzusammensetzung nach einem der Ansprüche 1 bis 13,
ii) Herstellen oder Bereitstellen einer künstlichen Wimper,
iii) in Kontaktbringen der in Schritt ii) hergestellten oder bereitgestellten künstlichen Wimper mit der in Schritt i) hergestellten oder bereitgestellten Klebstoffzusammensetzung, sodass ein Teil der Klebstoffzusammensetzung an der künstlichen Wimper haftet und diese benetzt, vorzugswiese an einem Teil der künstlichen Wimper,
iv) in Kontaktbringen einer zu verlängernden Wimper mit der in Schritt iii) mit der Klebstoffzusammensetzung benetzten künstlichen Wimper mit einer zu verlängernden (natürlichen) Wimper, sodass die Klebstoffzusammensetzung zwischen der zu verlängernden Wimper und der künstlichen Wimper angeordnet ist,
v) Bestrahlen der in Klebstoffzusammensetzung mit Licht, sodass die zwischen der zu verlängernden Wimper und der künstlichen Wimper angeordnet Klebstoffzusammensetzung aushärtet und die zu verlängernden Wimper mit der künstlichen Wimper verklebt werden.

15. Klebstoffzusammensetzung wie in einem der Ansprüche 1 bis 13 definiert.
